# EUROPEAN PATENT APPLICATION

(11) **EP 4 440 011 A1**
(43) Date of publication of application: **02.10.2024**
(21) Application number: 21965246.8
(22) Date of filing: 26.11.2021
(51) Int. Cl.: H04B 17/40

(54) **SIGNAL SENDING METHOD AND APPARATUS, AND INFORMATION SENDING METHOD AND APPARATUS**

(71) Applicant: FUJITSU LIMITED, Kawasaki-shi, Kanagawa 211-8588 (JP)
(72) Inventor: JIANG, Qinyan, Beijing 100022 (CN); ZHANG, Lei, Beijing 100022 (CN); CHEN, Zhe, Beijing 100022 (CN); YI, Su, Beijing 100022 (CN)
(74) Representative: Haseltine Lake Kempner LLP
(86) International application number: PCT/CN2021/133741
(87) International publication number: WO 2023/092513

(57) **Abstract**

Embodiments of this disclosure provide a signal transmitting method and an information receiving method and apparatuses thereof. The signal transmitting method includes: determining transmit power of a first signal and/or transmit power of a second signal by a repeater; and transmitting or not transmitting the first signal and/or the second signal.

## Description

### Field

This disclosure relates to the field of communication.

### Background

Compared with traditional 2G (second generation mobile communication technology), 3G (third generation mobile communication technology) and 4G (fourth generation mobile communication technology) systems, a 5G (fifth generation mobile communication technology) system is able to provide larger bandwidths and higher data rates, and is able to support more types of terminals and vertical services. For this reason, a frequency band range/operating bandwidth supported by a 5G system is/are obviously higher than those of 2G, 3G and 4G systems, and the 5G system supports higher carrier frequencies. For example, a 5G system may be deployed in a millimeter waveband.

However, the higher a carrier frequency, the more severe a fading experienced by signals during transmission. Therefore, in actual deployment of a 5G system, especially in the millimeter waveband, how to better enhance cell coverage has become an urgent problem to be solved.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In order to better solve the coverage problem of cellular mobile communication systems in practical deployment, use of a radio frequency (RF) repeater to amplify and forward signals between devices is commonly used means of deployment. RF repeaters are widely used in actual deployment of 2G, 3G and 4G systems, with advantages that it is low in cost, easy in deployment and has no excessive latency. Generally speaking, a traditional RF repeater is a device that amplifies and forwards signals between devices in the RF domain. That is, RF repeaters are non-regenerative type of relay nodes that simply amplify and forward all received signals directly.

A traditional RF repeater has no communication capability. That is, a traditional RF repeater is unable to exchange information with other devices (e.g. a base station/a terminal equipment, etc.). Specifically, in terms of reception, the traditional RF repeater does not support measuring/demodulating/decoding a forwarding signal, nor does it receive signals other than the forwarding signal. In terms of transmission, the traditional RF repeater only amplifies and forwards signals, and does not support generated signals or transmitting signals generated by itself.

Therefore, operation-related configurations (such as amplification gains, and antenna directions, etc.) of the traditional RF repeater are usually manually set or adjusted, and are unable to be adaptively and/or dynamically adjusted. For example, an antenna direction is usually manually set and adjusted during initial installation, so that an antenna at a base station side points towards a direction of an incoming wave of base station, and an antenna at a terminal side points towards an area where enhanced deployment is needed. For another example, an amplification gain is also set and adjusted during initial installation, so as to achieve an expected coverage enhancement effect as much as possible.

It was found by the inventors that using RF repeaters for coverage enhancement is one of feasible solutions to address coverage issues encountered in deployment of 5G systems. However, due to that a traditional RF repeater is lack of communication capabilities, it is unable to adaptively and/or dynamically adjust transmit power/amplification gain, and/or beam direction/width, which may cause significant interference to surrounding devices and may unable to be flexibly adjusted to avoid interference as much as possible, thereby potentially significantly improving noise interference level of the system and reducing system throughput. Thus, in order to reduce interference and support adaptive and/or dynamic beam management and/or power control of the RF repeater, the RF repeater needs to have communication functions in addition to the above signal forwarding functions. That, in addition to forwarding signals, the RF repeater also needs to exchange information with other devices (e.g. a base station/a terminal equipment, etc.). For example, it needs to receive (such as including measuring/demodulating/decoding) signals (forwarding signals or signals other than forwarding signals), and also needs to generate (such as including encoding/modulating/generating sequences) signals and transmit signals generated by itself. However, there is currently no method for transmitting forwarding signals and/or generated signals, especially a repeater needs to transmit a plurality of (more than one) signals simultaneously (such as forwarding signals and generated signals), there is no discussion on how to determine whether to transmit a plurality of signals or how to transmit signals that need to be transmitted.

In order to solve at least one of the above problems, embodiments of this disclosure provide a signal transmitting method and an information transmitting method and apparatuses thereof.

According to an aspect of the embodiments of this disclosure, there is provided a signal transmitting apparatus, applicable to a repeater, wherein the apparatus includes:
a determining module configured to determine transmit power of a first signal and/or transmit power of a second signal, and
a transmitting module configured to transmit or not transmit the first signal and/or the second signal.

According to another aspect of the embodiments of this disclosure, there is provided an information transmitting apparatus , applicable to a third device, wherein the apparatus includes:
a transmitting unit configured to transmit first indication information and/or second indication information, the first indication information being used to indicate parameters related to transmit power of a first signal, and the second indication information being used to indicate parameters related to transmit power of a second signal.

One of the advantages of the embodiments of this disclosure exists in that by determining the transmit power of the forwarding signal and/or the generated signal by the repeater, the repeater may control power when simultaneous transmitting forwarding signals and/or generated signals is/are needed, which may avoid power limitation, and improve transmission efficiency and throughput of the entire network.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is schematic diagram of an application scenario of an embodiment of this disclosure;
FIG. 2 is a schematic diagram of a signal transmitting method of a repeater of an embodiment of this disclosure;
FIG. 3 is an exemplary diagram of a communication signal and a forwarding signal of an embodiment of this disclosure;
FIG. 4 is a schematic diagram of a signal transmitting apparatus of an embodiment of this disclosure;
FIGs. 5-7 are schematic diagrams of operating scenarios the repeater of an embodiment of this disclosure;
FIG. 8 is a schematic diagram of a signal transmitting apparatus of an embodiment of this disclosure;
FIG. 9 is another schematic diagram of a signal transmitting apparatus of the embodiment of this disclosure; and
FIG. 10 is a schematic diagram of the repeater of an embodiment of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term. A base station may be fixed or mobile.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or a core network device, and may include one or more network devices described above. The term "user side" or "terminal side" or "terminal equipment side" refers to a side of a user or a terminal, which may be a UE, and may include one or more terminal equipments described above.

Without causing confusion, the terms "uplink control signal" and "uplink control information (UCI)" or "physical uplink control channel (PUCCH)" are interchangeable, and terms "uplink data signal" and "uplink data information" or "physical uplink shared channel (PUSCH)" are interchangeable.

The terms "downlink control signal" and "downlink control information (DCI)" or "physical downlink control channel (PDCCH)" are interchangeable, and the terms "downlink data signal" and "downlink data information" or "physical downlink shared channel (PDSCH)" are interchangeable.

In the embodiments of this disclosure, signaling includes physical layer signaling and/or higher layer signaling. The physical layer signaling refers to, for example, DCI. Higher layer signaling may be, for example, radio resource control (RRC) signaling; for example, it is referred to an RRC message, which includes a master information block (MIB), system information, and a dedicated RRC message; or, it is referred to an as an RRC information element (RRC IE), or an RRC message, or an information domain included in an RRC information element (or an information domain included in an information domain). Higher-layer signaling may also be, for example, medium access control (MAC) signaling, or an MAC control element (MAC CE); however, this disclosure is not limited thereto.

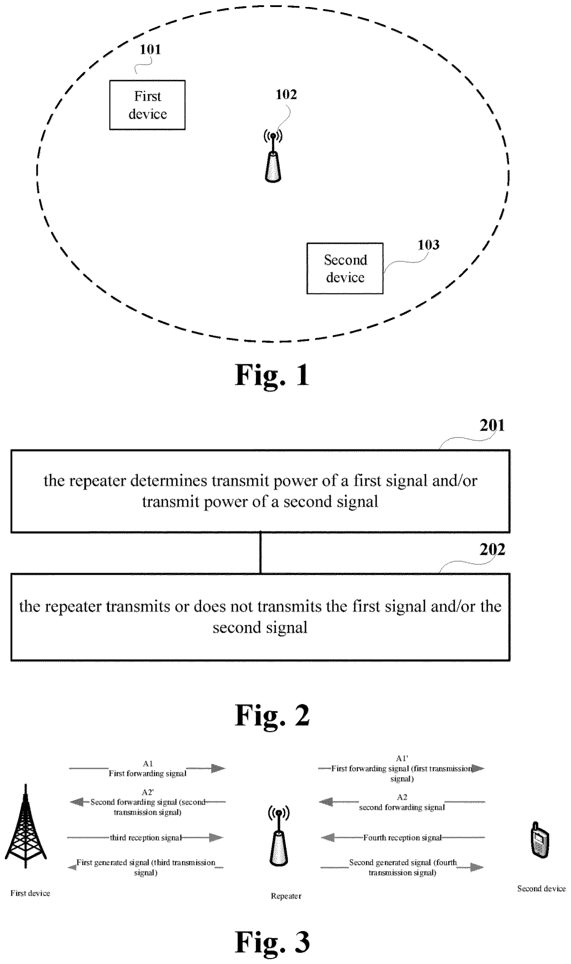

FIG. 1 is schematic diagram of an application scenario of an embodiment of this disclosure. As shown in FIG. 1, for the sake of description, the description shall be given by taking a first device 101, a repeater 102 and a second device 103 as examples. As shown in FIG. 1, the repeater 102 may forward signals between the first device 101 and the second device 103. For example, the repeater 102 may forward signals transmitted by the first device 101 to the second device 103, or the repeater 102 may forward signals transmitted by the second device 103 to the first device 101, or the repeater 102 may forward signals transmitted by the second device 103 to the first device 101 and forward signals transmitted by the first device 101 to the second device 103.

In the embodiment of this disclosure, existing traffics or traffics that may be implemented in the future may be performed between the 5G base station and the terminal equipment. For example, such traffics may include but not limited to enhanced mobile broadband (eMBB), massive machine type communication (mMTC), ultra-reliable and low-latency communication (URLLC), and vehicle to everything (V2X) communication, etc.

Various implementations of the embodiments of this disclosure shall be described below with reference to the accompanying drawings. These implementations are illustrative only, and are not intended to limit this disclosure.

### Embodiment of a first aspect

The embodiment of this disclosure provides a signal transmitting method, which shall be described from a side of a repeater.

FIG. 2 is a schematic diagram of a signal transmitting method of a repeater of the embodiment of this disclosure. As shown in FIG. 2, the method includes:
step 201: the repeater determines transmit power of a first signal and/or transmit power of a second signal; and
step 201: the repeater transmits or does not transmit the first signal and/or the second signal.

According to the above embodiment, by determining the transmit power of the forwarding signal and/or the generated signal by the repeater, the repeater may control power when simultaneous transmitting forwarding signals and/or generated signals is/are needed, which may avoid power limitation, and improve transmission efficiency and throughput of the entire network.

It should be noted that FIG. 2 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 2.

In the embodiment of this disclosure, the repeater may also be expressed as an RF repeater, a relay, or an RF relay; or, it may also be expressed as a repeater node, or a relay node; or, it may also be expressed as a smart repeater, a smart relay, a smart repeater node, a smart relay node, etc. A name of the repeater is not limited in this disclosure, and any device that is able to achieve the following functions is included in the scope of the repeater of this disclosure.

In the embodiment of this disclosure, the repeater may be a network device, and/or a terminal equipment, and the repeater has (corresponds to) one or more identifiers used to (uniquely) identify the repeater. When there are a plurality of identifiers used to identify the repeater, different identifiers have different uses or functions. It should be pointed out that an identifier may have one or more uses or functions, and uses and functions of different identifiers may or may not cross or overlap (however, it is not limited thereto). The above "different uses or functions" refer to that different uses or functions of different identifiers are not completely identical/overlapped.

For example, one or more identifiers may be used for at least one of the following, one identifier may be used for one or more of the following, and items to which different identifiers correspond cross or overlap or not:
used to uniquely identify the network device within the network devices;
used to uniquely identify the terminal equipment within the terminal equipment;
used to identify or manage connection between the repeater and (one/more) network device(s);
used to identify or manage connection between the repeater and (one/more) terminal equipment(s).

For example, the one or more identifiers is/are, for example, an IMSI, or a repeater-specific RNTI or CGI, and is/are preconfigured, or predefined, or configured via signaling; however, the embodiment of this disclosure is not limited thereto.

In the embodiment of this disclosure, signals exchanged between the repeater and other devices include forwarding signals and communication signals, wherein signals between the first device and second device (or signals generated by the first device and/or signals generated by the second device) that may be forwarded by the repeater are referred to as forwarding signals, and the repeater receives, amplifies and transmits the forwarding signals in an RF domain. Generally, the repeater performs such signal processing as frequency conversion, filtering, and amplification, etc., on the received forwarding signals and then transmits them. In addition, the repeater may also receive communication signals (also referred to as reception communication signals), and the repeater needs to measure and/or demodulate and/or decode the communication signals; or, the repeater may also transmit communication signals (also referred to as transmission communication signals or generated signals). In order to transmit the communication signals, the repeater needs to perform sequence generation and/or encoding and/or modulation, etc. The forwarding signals and communication signals transmitted by the repeater may be independently transmitted or may be combined into one signal and transmitted. For example, one of modes based on time division (TD), frequency division (FD), code division (CD) and spatial division, etc. or any combination thereof may be used for combination, and this disclosure is not limited thereto.

In some embodiments, if a signal belongs to a forwarding signal, receiving the signal by the repeater refers to receiving the signal in the RF domain (i.e. the repeater does not measure and/or demodulate and/or decode the signal), and the repeater transmits the signal in the RF domain (i.e. the repeater does not perform sequence generation and/or encoding and/or modulation for the purpose of transmitting the signal). If a signal belongs to a communication signal, receiving the signal by the repeater (assuming that the signal belongs to a reception communication signal) includes that the repeater measures and/or demodulates and/or decodes the signal, and the repeater transmits the signal (assuming that the signal belongs to a transmission communication signal). In order to transmit the signal, sequence generation and/or encoding and/or modulation is/are needed.

In some embodiments, the communication signal includes a communication signal between the repeater and the first device, and/or a communication signal between the repeater and the second device, and/or a communication signal between the repeater and the third device. Furthermore, the communication signal between the repeater and the first device includes a signal transmitted by the first device to the repeater (such as being referred to as a first downlink communication signal, or a first reception communication signal) and/or a signal transmitted by the repeater to the first device ((such as being referred to as a first uplink communication signal, or a first transmission communication signal, or a first generated signal, or a first uplink generated signal). Likewise, the communication signal between the repeater and the second device includes a signal transmitted by the repeater to the second device (such as being referred to as a second downlink communication signal, or a second transmission communication signal, or a second transmission communication signal, or a second generated signal, or a downlink generated signal) and/or a signal transmitted by the second device to the repeater (such as being referred to as a second uplink communication signal, or a second reception communication signal). The communication signal between the repeater and the third device includes a signal transmitted by the third device to the repeater (such as being referred to as a third downlink communication signal, or a third reception communication signal) and/or a signal transmitted by the repeater to the third device (such as being referred to as a third uplink communication signal, or a third transmission communication signal, or a third generated signal, or a second uplink generated signal).

FIG. 3 is a schematic diagram of exchanging signals between the first device, the second device and the repeater. As shown in FIG. 3, the forwarding signal includes a first forwarding signal and a second forwarding signal (Al, A2, A1', A2'), and the repeater may receive, filter, amplify and transmit the forwarding signal, but it does not decode and/or demodulate and/or measure the forwarding signal. The communication signal includes a third reception signal, a fourth reception signal, a third transmission signal and a fourth transmission signal. The repeater needs to decode and/or demodulate and/or measure the third reception signal and/or the fourth reception signal; or, the repeater needs to generate the third transmission signal and/or the fourth transmission signal. Operations of generation may include generating a sequence(s) to which the third transmission signal and/or fourth transmission signal correspond(s), and performing encoding and/or modulation (the generation is based or not based on the third reception signal and/or fourth reception signal, which are also referred to as a first generated signal and/or a second generated signal), etc., wherein the third reception signal and/or the fourth reception signal include(s) a reference signal(s), etc.

It should be noted that not all signals needing to be forwarded are referred to as forwarding signals, and the above forwarding signals are only for forwarding signals that the repeater will not decode and/or demodulate and/or measure. For example, when the repeater receives (decodes and/or demodulates and/or measures) the third reception signal (such as a reference signal and/or configuration information), it may also forward the third reception signal to the second device (or not forward). However, as the repeater performs such operations as decoding and/or demodulation and/or measurement on the third reception signal, the third reception signal is also referred to as a communication signal.

In some embodiments, signals to be transmitted by the repeater include a forwarding signal and a generated signal. The generated signal may be independently generated by the repeater, or may be generated based on a reception communication signal. For example, the repeater measures based on the reception communication signal, or demodulates/decodes information carried by the reception communication signal, and generates a signal based on a measurement result and decoded information. In some embodiments, the forwarding signal includes a first transmission signal forwarded to the first device (also referred to as a first forwarding signal or an uplink forwarding signal) and a second transmission signal forwarded to the second device (also referred to as a second forwarding signal or a downlink forwarding signal); the generated signal includes a third transmission signal (a first generated signal or an uplink generated signal) generated and transmitted by the repeater to the first device and a fourth transmission signal (a second generated signal or downlink generated signal) generated and transmitted by the repeater to the second device. The first device is a first terminal equipment, and the second device is a second terminal equipment, or the first device is a network device, and the second device is a terminal equipment, or the first device is a first network device, and the second device is a second network device.

Taking that the first device is a network device and the second device is a terminal equipment as an example, the first generated signal includes a PRACH, a PUCCH, a PUSCH, and an SRS, and the second generated signal includes an SSB, a CSI-RS, and an SRS. The first forwarding signal is a downlink signal, and includes, for example, an SSB (including a PSS, an SSS, a PBCH and DMRSs of a PBCH), a CSI-RS, a PDCCH, a PDSCH, a DM-RS, a PT-RS, and a PRS, etc.; and the second forwarding signal is an uplink signal, and includes, for example, a PRACH, a PUCCH, a PUSCH, and an SRS, etc., which shall not be enumerated herein any further.

Taking that both the first device and the second device are terminal equipment as an example, the first generated signal, the second generated signal, the first forwarding signal and the second forwarding signal respectively include, for example, an S-SSB (an S-PSS, an S-SSS, a PSBCH, and a DMRS of the PSBCH), a PSSCH, a PSCCH, a PSFCH, a DMRS, a PT-RS, a CSI-RS, and an SRS, etc.

Taking that both the first device and the second device are network devices as an example, the first generated signal, the second generated signal, the first forwarding signal and the second forwarding signal respectively include, for example, an inter-node message, an SSB, a CSI-RS, a PDCCH, a PDSCH, a PRS, a PRACH, a PUCCH, a PUSCH, and an SRS, etc., which shall not be enumerated herein any further.

When the repeater needs to transmit a plurality of signals simultaneously, such as in a case where the RF repeater needs to transmit signals generated by itself to other devices, in the method of the embodiment of this disclosure whether to transmit forwarding signals and/or generated signals and how to transmit signals needing to be transmitted may be determined.

Following description shall be given by taking that a plurality of signals include a first signal and a second signal as an example. However, the embodiment of this disclosure is not limited thereto, and the plurality of signals may further include other signals, or may include a plurality of different first signals, and/or a plurality of different second signals, etc., which shall not be enumerated herein any further.

In the embodiment of this disclosure, the first signal and the second signal in 201 belong to the forwarding signal or generated signal of the repeater, or the first signal includes the forwarding signal and/or the generated signal, and the second signal includes the forwarding signal and/or the generated signal. For example, the first signal and the second signal are a combination of any two of a first transmission signal, a second transmission signal, a third transmission signal and a fourth transmission signal. For example, the first signal and the second signal are signals transmitted to identical terminal equipment, or signals transmitted to different terminal equipment, or both the first signal and the second signal are forwarding signals, or both of them are generated signals, or one of them is a forwarding signal, and the other is a generated signal, etc., and the embodiment of this disclosure is not limited thereto.

In the embodiment of this disclosure, the first signal and the second signal may overlap in the time domain, for example, a time domain resource of the first signal and a time domain resource of the second signal completely or partially overlap. Or, an interval between the first signal and the second signal in the time domain may be less than or not greater than a first predetermined value, for example, if the time domain resource of the first signal and the time domain resource of the second signal do not coincide, and an interval therebetween is less than or not greater than the first predetermined value. The first predetermined value may be preconfigured, or predefined, or may be configured via signaling. The first signal and the second signal may be TDM or non-TDM. For example, when the signals of the repeater include a plurality of signals, the plurality of signals overlap in the time domain, or an interval therebetween in the time domain may be less than or not greater than the first predetermined value, which shall not be repeated herein any further.

In the embodiment of this disclosure, the first signal and the second signal may be at identical carriers or different carriers, correspond to the same cell or the same cell group or different cells, and may be intra-frequency signals or inter-frequency signals, and this embodiment is not limited thereto.

In the embodiment of this disclosure, in step 201, the repeater may allocate the transmit power of the first signal and/or the transmit power of the second signal based on priorities, and/or determine whether to transmit the first signal and/or the second signal.

In some embodiments, the repeater may allocate the transmit power of the first signal and/or the second signal based on priorities when the transmit power is limited. However, this disclosure is not limited thereto, and in a case where the transmit power is limited, the repeater may also allocate the transmit power of the first signal and/or the second signal based on priority.

In some embodiments, the priorities may be related to whether the signal is a generated signal or a forwarding signal, or may be related to an object receiving the transmission signal.

For example, the priorities may include that a priority of the generated signal of the repeater is higher or lower than a priority of the forwarding signal of the repeater, and/or a priority of a transmission signal of a first device side of the repeater is higher or lower than a priority of a transmission signal of a second device side of the repeater.

In some embodiments, in the case where the generated signal of the repeater includes a first generated signal and a second generated signal, priorities of the first generated signal and the second generated signal may be identical or different. Likewise, in the case where the forwarding signal of the repeater includes a first forwarding signal and a second forwarding signal, priorities of the first forwarding signal and the second forwarding signal may be identical or different.

In some embodiments, the transmission signal of the first device side may include a first forwarding signal and/or a first generated signal, and the transmission signal of the second device side may include a second forwarding signal and/or a second generated signal. In the case where the transmission signal of the first device side includes the first forwarding signal and the first generated signal, priorities of the first forwarding signal and the first generated signal are identical or different, and in the case where the transmission signal of the second device side includes the second forwarding signal and the second generated signal, priorities of the second forwarding signal and the second generated signal are identical or different.

For example, the priorities of these signals may be as follows (in a descending order of the priorities):
the first generated signal, the second generated signal, the first forwarding signal, the second forwarding signal;
or, the first forwarding signal, the second forwarding signal, the first generated signal, the second generated signal;
or, the first generated signal, the first forwarding signal, the second generated signal, the second forwarding signal;
or, the second generated signal, the second forwarding signal, the first generated signal, the first forwarding signal;
or, the second forwarding signal, the second generated signal, the first forwarding signal, the first generated signal;
or, the second generated signal, the first generated signal, the second forwarding signal, the first forwarding signal;

However, this disclosure is not limited thereto. For example, as described above, the priorities of the first forwarding signal and/or the second forwarding signal may be identical, the priorities of the first generated signal and the second generated signal may be identical, or the priorities of the first forwarding signal and the first generated signal may be identical, or the priorities of the second forwarding signal and the second generated signal may be identical, which shall not be enumerated herein any further.

In some embodiments, the priorities may also be related to signal types. For example, the priorities decrease or increase in an order of signal types of an SRS, a PUCCH, a PUSCH and a PRACH. For example, if the priorities of the first signal and the second signal are identical, the priorities may also be determined by taking signal types of the first signal and/or the second signal into account. For example, the first signal and the second signal are the first generated signal and the second generated signal, respectively. If the first signal is a PRACH, the priority of the first signal is higher than that of the second signal, and if the first signal is an SRS, the priority of the first signal is lower than that of the second signal. For another example, the first signal and the second signal are the first generated signal and the second forwarding signal, respectively. If the first signal is a PRACH, the priority of the first signal is higher than that of the second signal, and if the first signal is an SRS, the priority of the first signal is lower than that of the first signal. For example, the priorities of these signals may be as follows (in a descending order of the priorities):
the first generated signal is a PRACH, the first generated signal is a PUSCH, the first generated signal is a PUCCH, a forwarding signal, and the first generated signal is SRS.

What described above is illustrative only, which shall not be enumerated herein any further.

In some embodiments, the priorities may be set in various dimensions. For example, the priorities may exist between intra-frequency signals, and/or inter-frequency signals, and/or signals at the same side, and/or signals at different sides, and/or forwarding signals, and/or generated signals, and/or cells, and/or cell groups, which shall be described below respectively.

For example, the priorities may exist between forwarding signals, and/or between generated signals. For example, the first signal and the second signal are respectively the first generated signal and the second generated signal, and the priorities of the first signal and the second signal are determined according to any of the above examples between the first generated signal and the second generated signal, or, the first signal and the second signal are respectively the first forwarding signal and the second forwarding signal, and the priorities of the first signal and the second signal are determined according to any of the above examples between the first forwarding signal and the second forwarding signal.

For example, the priorities may exist between signals at the same side, and/or between signals at different sides. The signals at the same side may refer to that transmission directions of the first signal and the second signal are identical, that is, receiving objects are identical, and the signals at different sides may refer to that transmission directions of the first signal and the second signal are different, that is, receiving objects are different. For example, the first signal and the second signal are the first transmission signal and a third transmission signal (at the same side) respectively, and the priorities of the first signal and the second signal are determined according to any one of the above examples between the first transmission signal and the third transmission signal, or, the first signal and the second signal are the first transmission signal and a fourth transmission signal (at different sides) respectively, and the priorities of the first signal and the second signal are determined according to any one of the above examples between the first transmission signal and the fourth transmission signal.

For example, the priorities may exist between intra-frequency signals, and/or between inter-frequency signals, wherein the intra-frequency signals may refer to that the first signal and the second signal are in the same frequency range, and the inter-frequency signals may refer to that the first signal and the second signal are in different frequency ranges; for example, the first signal and the second signal are respectively the first transmission signal and the second transmission signal (intra-frequency signals), and the priorities of the first signal and the second signal are determined according to any one of the above examples between the first transmission signal and the second transmission signal; or, the first signal and the second signal are respectively the first transmission signal and the second transmission signal (inter-frequency signals), and the priorities of the first signal and the second signal are determined according to any of the above examples between the first transmission signal and the second transmission signal, wherein when the priorities exist between the inter-frequency signals, the priorities in a plurality of frequency band ranges in the inter-frequencies may be uniformly set, or the priorities in a plurality of frequency band ranges in the inter-frequencies may be independently set in each frequency band range.

For example, the priorities may exist between cells (cell groups). For example, the first signal and the second signal are respectively the first transmission signal and the second transmission signal (corresponding to the same cell or cell group), and the priorities of the first signal and the second signal are determined according to any one of the above examples between the first transmission signal and the second transmission signal.

The above priorities in the dimensions may be set separately or in a combined manner, and this disclosure is not limited thereto (by taking that they are implemented separately as an example), which shall not be enumerated herein any further.

In some embodiments, the priorities may be predefined, or may be configured via signaling. For example, the repeater may receive signaling transmitted by a third device, and determine power of a signal to be transmitted according to the signaling. The third device may be a network device and/or a terminal equipment, or may be one of the first device and the second device, or may be a device different from the first device and the second device. For example, when the third device is a network device, it is a serving device or cell of the repeater.

In some embodiments, when the priority of the first signal is higher than that of the second signal, the repeater prioritizes allocation of the transmit power of the first signal, and/or the repeater does not transmit the second signal; and/or, when the priority of the second signal is higher than that of the first signal, the repeater prioritizes allocation of the transmit power of the second signal, and/or, the repeater does not transmit the first signal.

For example, the repeater allocates the power in an order of the priorities. Transmit power is allocated to a signal with a highest priority, and then power is allocated to signals with a secondarily high priority in the order of the priorities. When remaining power is unable to satisfy the transmit power of the signals with the secondarily high priority, the signals and signals with priorities lower than that of the signals are not transmitted, or, the remaining power is allocate to the signals with the secondarily high priority and the signals with priorities lower than that of the signals are not transmitted, or, weights (used to reduce actual transmit power of the signals) are set for the signals with the secondarily high priority according to the priorities. For example, the higher the priorities, the larger the weights, and the actual transmit power of the signals with the secondarily high priority=specified transmit power X the weights. Moreover, a sum of the actual transmit power of the signals with the secondarily high priority is less than or equal to maximum transmit power, and the repeater allocates transmit power to the signals with the secondarily high priority according to weighted actual transmit power.

For another example, the repeater sets weights for all signals to be transmitted according to priorities, for example, the higher the priorities, the larger the weights. Actual transmit power of the signals=the specified transmit power X the weights, and a sum of the actual transmit power of the signals is less than or equal to the maximum transmit power. The repeater allocates transmit power to the signals according to the weighted actual transmit power.

For a further example, the repeater preferentially allocates transmit power to the signals with the highest priority, and does not transmit the signals with the secondarily high priority.

In some embodiments, the repeater may determine the transmit power of the first signal and/or the second signal when the transmit power is limited. For example, the repeater may determine the transmit power of the first signal and the second signal respectively, and in a case where a sum of the transmit power of the first signal and the second signal exceeds first maximum transmit power, the repeater adjusts the transmit power of the first signal and/or the second signal, and/or the repeater allocates the transmit power of the first signal and/or the second signal according to the priorities, and/or the repeater does not transmit the first signal or the second signal.

The repeater may adjust the transmit power of the first signal and/or the second signal in various ways. For example, the repeater may determine weighting coefficients respectively for the transmit power of the first signal and/or the second signal, adjusted transmit power of the first signal and/or the second signal is obtained by multiplying the transmit power of the first signal and/or the second signal before adjustment by the weighting coefficients, and with the determined weighting coefficients, a sum of the adjusted transmit power of the signal(s) to be transmitted (the first signal and/or the second signal) is made to be less than or equal to the first maximum transmit power. The repeater transmits the first signal and/or the second signal at the adjusted transmit power. The weighting coefficients of the first signal and the second signal may be identical or different. However, this disclosure is not limited thereto, and the transmit power of the first signal and/or the second signal may also be adjusted by other means.

The repeater allocates the transmit power of the first signal and/or the transmit power of the second signal according to the priorities, and reference may be made to the above method for a way of the repeater for not transmitting the first signal or second signal, which shall not be repeated herein any further.

In some embodiments, the first signal and the second signal may be in the same cell group, which corresponds to the first maximum transmit power. That is, when the signals to be transmitted are in the same cell group, the maximum transmit power of the repeater may be determined according to the first maximum transmit power to which the first cell group corresponds. The term "cell group" may also be expressed as the terms "carrier group", and "frequency band group", etc.

In some embodiments, the repeater may determine the transmit power of the first signal and the second signal separately, and when the sum of the transmit power of the first signal and the second signal exceeds second maximum transmit power, the repeater adjusts the transmit power of the first signal and/or the second signal, and/or the repeater allocates the transmit power of the first signal and/or the second signal according to priorities, and/or the repeater does not transmit the first signal or the second signal.

Reference may be to the above methods for methods for adjusting or allocating the transmit power by the repeater and a method for not transmitting the first signal or the second signal by the repeater, which shall not be repeated herein any further.

In some embodiments, the first signal and the second signal may be in different cell groups, and the different cell groups correspond to secondarily maximum transmit power. That is, when the signals to be transmitted are in different cell groups, the maximum transmit power of the repeater may be determined according to the second maximum transmit power to which different cell groups correspond. For example, the maximum transmit power of the repeater is any value or a minimum value or a maximum value or an average value or a weighted average of the second maximum transmit power to which different cell groups correspond, or a sum of second maximum transmit power to which a part or all of cell groups correspond, etc.

How to allocate (adjust) the transmit power of the signals according to the priorities are described above. The specified transmit power may be indicated by the first indication information and/or the second indication information, and/or may be determined or calculated by the repeater. Reference may be made to existing techniques for a method for determining or calculating by the repeater, which is not limited in this disclosure.

In some embodiments, the repeater may receive the first indication information and/or the second indication information transmitted by the third device, the first indication information being used to indicate parameters related to transmit power of the first signal, and the second indication information being used to indicate parameters related to transmit power of the second signal. Thus, the repeater may determine the transmit power of the signals to be transmitted according to the parameters.

In this embodiment, the "parameters" may also be expressed as the term "configuration". The above first indication information and second indication information may be directly configured by the third device for the repeater, or may be indicated by the third device to the repeater based on measurement results reported by the first device or the second device, and the embodiment of this disclosure is not limited thereto. The above first indication information and/or the second indication information may be included in side control information and transmitted, the side control information including, for example, a signal/information for configuring/indicating operating parameters of the repeater, and/or signal/information for establishing connection between the repeater and a network device and/or a terminal equipment. However, this disclosure is not limited thereto, for example, the side control information may be carried by a third downlink communication signal.

In some embodiments, the first indication information may include the transmit power and/or an amplification gain of the repeater, or maximum transmit power and/or a maximum amplification gain of the repeater. The repeater may determine the transmit power and/or an amplification gain of the first signal according to the first indication information, that is, the repeater may transmit the first signal according to the transmit power and/or amplification gain determined by the first indication information. When the first indication information is the transmit power and/or amplification gain of the repeater, the repeater may directly determine the transmit power and/or amplification gain of the first signal; and when the first indication information is the maximum transmit power and/or a maximum amplification gain, the repeater may determine the transmit power and/or amplification gain of the first signal according to the maximum transmit power and/or maximum amplification gain, and reference may be made to relevant techniques for specific implementation thereof.

In some embodiments, the second indication information may include the transmit power and/or amplification gain of the repeater, or the maximum transmit power and/or maximum amplification gain of the repeater. The repeater may determine the transmit power and/or amplification gain of the second signal according to the second indication information, that is, the repeater may transmit the second signal according to the transmit power and/or amplification gain determined by the second indication information. When the second indication information is the transmit power and/or amplification gain of the repeater, the repeater may directly determine the transmit power and/or amplification gain of the second signal; and when the second indication information is the maximum transmit power and/or maximum amplification gain, the repeater may determine the transmit power and/or amplification gain of the second signal according to the maximum transmit power and/or maximum amplification gain, and reference may be made to relevant techniques for specific implementation thereof. However, this disclosure is not limited thereto, and the first indication information and the second indication information may also be other information.

In the embodiment of this disclosure, the network device may support (serve) one or more cells, the one or more cells being referred to as network device served cells. In some cases, the network device may also be referred to as (replaced by) a cell or a serving cell, etc., which shall not be repeated herein any further. For example, the first device is a network device, the second device is a terminal equipment, and a cell served by the first device is referred to as a first cell, in other words, the repeater is used to amplify a downlink signal and/or an uplink signal of the first cell. The first cell is or is not a serving cell of the repeater and/or the terminal equipment. In the embodiment of this disclosure, the repeater, the first device and the second device are at different geographical positions, and are not connected to each other by lines (such as optical cables). That is, the repeater, the first device and the second device transmit/receive signals to/from each other via air interfaces.

In some embodiments, there exists connection between the repeater and the third device, there exists connection between the repeater and the second device or not, and there exists connection between the first device and the second device or not. There existing connection refers to that communication or exchange of information may be performed between devices, for example, transmission/reception (including demodulation/decoding) of user-plane data may be performed between the devices, and/or transmission/reception (including demodulation/decoding) of data that may only be transmitted in an RRC connected state may be performed between the devices, and/or transmission/reception (including demodulation/decoding) of data scrambled by a device-specific identifier (such as an RNTI) may be performed between the devices.

In some embodiments, the third device is a network device.

In some embodiments, if there exists connection between two devices, one device may be referred to as a serving device, or a serving cell (if the one device is a network device), or a parent node, of the other device. For example, if there exists connection between the repeater and the third device, the third device is a serving device, or a serving cell, or a parent node, of the repeater. For example, if the repeater is accessed to the third device (or a cell served by the third device) in a random access procedure and establishes connection with the third device, the cell is a serving cell of the repeater. For another example, when the first device and the second device are a network device and a terminal equipment respectively, if there exists connection between the first device and the second device, the network device is a serving device (or a serving cell) of the terminal equipment; however, the embodiment of this disclosure is not limited thereto.

In some embodiments, the third device is the first device, that is, the repeater not only is connected to the third device, but also forwards signals transmitted by the third device and/or signals transmitted by other devices to the third device. For example, the repeater serves for one or more first devices (in terms of amplifying signals), the one or more first devices is also the third device(s). That is, a communication signal between the repeater and the third device is a communication signal between the repeater and the first device. For example, the first (third) device may be a serving device, or a serving cell, or a parent node, of the repeater; however, this disclosure is not limited thereto, and the third device may also be a device that is different from the first device and the second device.

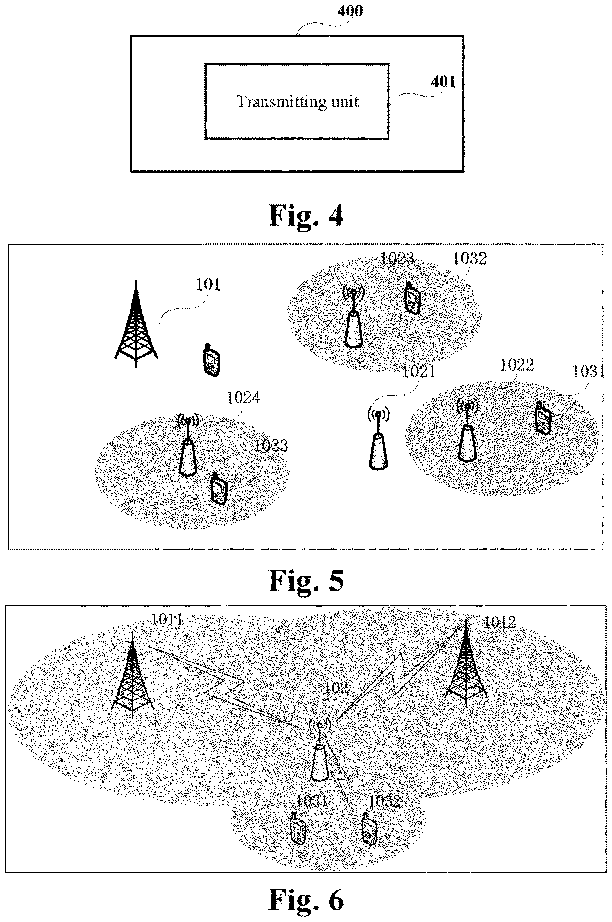

In the embodiment of this disclosure, the number of repeaters used between the first device and the second device may be one or more, that is, the signal between the first device and the second device may be amplified once or a plurality of times. Each of the plurality of repeaters may amplify and forward the signal in the same manner, and following description shall be given by taking only one repeater as an example. It should be noted that when there are a plurality of repeaters between the first device and the second device, a signal received by one of the repeaters may be transmitted from the first device, or may be amplified by other repeaters. FIG. 5 is a schematic diagram of a scenario of forwarding by the repeater. As shown in FIG. 5, there are two repeaters 1021 and 1022 between the first device 101 and the second device 1031, there is a repeater 1023 between the first device 101 and the second device 1032, and there is a repeater 1024 between the first device 101 and the second device 1033.

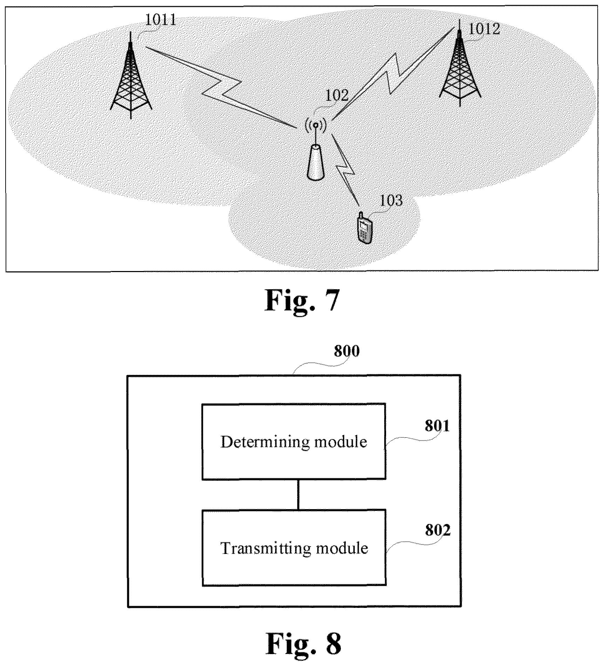

In the embodiment of this disclosure, a repeater may also serve for one or more first devices or second devices, and operating frequencies of different first devices or second devices are identical or different. FIGs. 6 and 7 are schematic diagrams of scenarios of forwarding by the repeater. As shown in FIG. 6, the repeater 102 serves for two network devices 1011 and 1012 of different operating frequencies. And furthermore, operating frequencies of the two terminal equipment 1031 and 1032 are identical or different. As shown in FIG. 7, the repeater 102 serves for two network devices 1011 and 1012 of identical operating frequencies.

The embodiment of this disclosure provides an information transmitting method, wherein the method includes (not shown):
the third device transmits first indication information and/or second indication information, the first indication information being used to indicate parameters related to the transmit power of the first signal, and the second indication information being used to indicate parameters related to the transmit power of the second signal. Implementation of the method is as described above, and shall not be repeated herein any further.

The steps or processes related to this disclosure are only described above; however, this disclosure is not limited thereto. The method of the embodiment of this disclosure may also include other steps or processes, and reference may be made to relevant techniques for specific contents of these steps or processes.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

According to the embodiment of this disclosure, by determining the transmit power of the forwarding signal and/or the generated signal by the repeater, the repeater may control power when simultaneous transmitting forwarding signals and/or generated signals is/are needed, which may avoid power limitation, and improve transmission efficiency and throughput of the entire network.

### Embodiment of a second aspect

The embodiment of this disclosure provides a signal transmitting apparatus, which is provided in a repeater. As a principle of the apparatus for solving problems is similar to that of the method in the embodiment of the first aspect, reference may be made to the implementation of the method in the embodiment of the first aspect for implementation of the apparatus, with identical or related parts being not going to be repeated herein any further.

FIG. 8 is a schematic diagram of a signal transmitting apparatus of the embodiment of this disclosure. As shown in FIG. 8, the signal transmitting apparatus 800 includes:
a determining module 801 configured to determine transmit power of a first signal and/or transmit power of a second signal; and
a transmitting module 802 configured to transmit or not transmit the first signal and/or the second signal.

In the embodiment of this disclosure, the first signal overlaps with the second signal in a time domain, or an interval between the first signal and the second signal in a time domain is less than or not greater than a first predetermined value.

In the embodiment of this disclosure, the first signal belongs to a forwarding signal or a generated signal of the repeater, and the second signal belongs to a forwarding signal or a generated signal of the repeater, wherein the forwarding signal includes a first transmission signal (a first forwarding signal) forwarded to a first device, and/or a second transmission signal (a second forwarding signal) forwarded to a second device, and the generated signal includes a third transmission signal (a first generated signal) generated by the repeater and transmitted to the first device, and/or, a fourth transmission signal (a second generated signal) generated by the repeater and transmitted to the second device.

In the embodiment of this disclosure, the determining module 801 allocates the transmit power of the first signal and/or the transmit power of the second signal according to a priority, and/or determines whether to transmit the first signal and/or the second signal.

In the embodiment of this disclosure, the priority includes that a priority of a generated signal of the repeater is higher or lower than a priority of a forwarding signal of the repeater, and/or, a priority of a transmission signal of a first device side of the repeater is higher or lower than a priority of a transmission signal of a second device side of the repeater.

In the embodiment of this disclosure, in a case where the generated signal of the repeater includes a first generated signal and a second generated signal, a priority of the first generated signal is identical to or different from a priority of the second generated signal.

In the embodiment of this disclosure, in a case where the forwarding signal of the repeater includes a first forwarding signal and a second forwarding signal, priorities of the first forwarding signal and/or the second forwarding signal are identical or different.

In the embodiment of this disclosure, in a case where the transmission signal of the first device side includes the first forwarding signal and the first generated signal, priorities of the first forwarding signal and the first generated signal are identical or different.

In the embodiment of this disclosure, in a case where the transmission signal of the second device side includes the second forwarding signal and the second generated signal, priorities of the second forwarding signal and the second generated signal are identical or different.

In the embodiment of this disclosure, the priority exists between intra-frequency signals, and/or between inter-frequency signals, and/or between signals at the same side, and/or between signals at different sides, and/or between forwarding signals, and/or between generated signals, and/or between cells, and/or between cell groups.

In the embodiment of this disclosure, the priority is related to a signal type.

In the embodiment of this disclosure, the first device is a first terminal equipment, the second device is a second terminal equipment, or the first device is a network device, and the second device is a terminal equipment, or the first device is a terminal equipment, and the second device is a network device, or the first device is a first network device, and the second device is a second network device.

In the embodiment of this disclosure, the first generated signal includes a PRACH, a PUCCH, a PUSCH, and an SRS, and the second generated signal includes an SSB, a CSI-RS, and an SRS.

In the embodiment of this disclosure, in a case where a priority of the first signal is higher than that of the second signal, the determining module 801 preferentially allocates the transmit power of the first signal, and/or, the determining module 801 determines not to transmit the second signal; and/or, in a case where the priority of the second signal is higher than that of the first signal, the determining module 801 preferentially allocates the transmit power of the second signal, and/or the determining module 801 determines not to transmit the first signal.

In the embodiment of this disclosure, the priority is predefined or is configured via signaling.

In the embodiment of this disclosure, the first signal and the second signal are at identical carriers or different carriers.

In the embodiment of this disclosure, the determining module 801 determines the transmit power of the first signal and the second signal respectively, and in a case where a sum of the transmit power of the first signal and the second signal exceeds first maximum transmit power, adjusts the transmit power of the first signal and/or the second signal, and/or allocates the transmit power of the first signal and/or the second signal according to the priorities, and/or does not transmit the first signal or the second signal.

In the embodiment of this disclosure, the first signal and the second signal are in the same cell group, which corresponds to the first maximum transmit power.

In the embodiment of this disclosure, the determining module 801 determines the transmit power of the first signal and the second signal separately, and when the sum of the transmit power of the first signal and the second signal exceeds second maximum transmit power, adjusts the transmit power of the first signal and/or the second signal, and/or allocates the transmit power of the first signal and/or the second signal according to priorities, and/or does not transmit the first signal or the second signal.

In the embodiment of this disclosure, the first signal and the second signal are in different cell groups, and the different cell groups correspond to second maximum transmit power.

In the embodiment of this disclosure, the signal transmitting apparatus 800 may further include: a receiving module configured to receive first indication information and/or second indication information, the first indication information being used to indicate parameters related to the transmit power of the first signal, and the second indication information being used to indicate parameters related to the transmit power of the second signal.

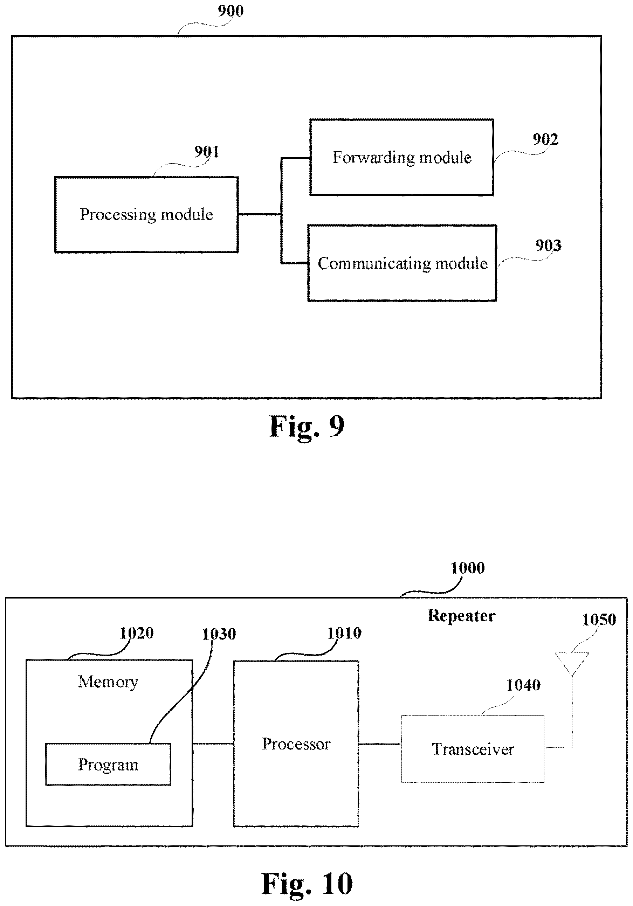

FIG. 9 is another schematic diagram of a signal transmitting apparatus of the embodiment of this disclosure. As shown in FIG. 9, a signal transmitting apparatus 900includes:
a processing module 901 configured to determine transmit power of a forwarding signal and/or a generated signal;
a forwarding module 902 configured to transmit or not to transmit the forwarding signal; and
a communicating module 903 configured to transmit or not to transmit the generated signal.

In the embodiment of this disclosure, the processing module 901 may determine the transmit power of the forwarding signal and/or the generated signal in a manner similar to that of the determining module 801, which shall not be repeated herein any further.

In the embodiment of this disclosure, the forwarding module 902 may transmit or not transmit the forwarding signal according to a determination result of the processing module 901. For example, the forwarding module 902 may amplify and transmit the forwarding signal according to the determination result of the processing module 901. When the processing module 901 does not allocate power for the forwarding signal, the forwarding module 902 does not transmit the forwarding signal.

In the embodiment of this disclosure, the communicating module 903 may transmit or not transmit the generated signal according to the determination result of the processing module 901. For example, the communicating module 903 may transmit the generated signal at allocated power according to the determination result of the processing module 901. When the processing module 901 does not allocate power for the generated signal, the communicating module 903 does not transmit the generated signal.

Furthermore, the communicating module 903 may be used to generate a generated signal; however, this disclosure is not limited thereto, and a generated signal may also be generated by other modules. Or, functions of the processing module 901 may also be respectively configured in the forwarding module 902 or the communicating module 903; however, this disclosure is not limited thereto.

The embodiment of this disclosure provides an information transmitting apparatus, which is provided in a third device. As a principle of the apparatus for solving problems is similar to that of the method in the embodiment of the first aspect, reference may be made to the implementation of the method in the embodiment of the first aspect for implementation of the apparatus, with identical or related parts being not going to be repeated herein any further.

FIG. 4 is a schematic diagram of an information transmitting apparatus of the embodiment of this disclosure. As shown in FIG. 4, the information transmitting apparatus 400 includes:
a transmitting unit 401 configured to transmit first indication information and/or second indication information, the first indication information being used to indicate parameters related to the transmit power of the first signal, and the second indication information being used to indicate parameters related to the transmit power of the second signal. Implementation of the transmitting unit 401 is as described above, and shall not be repeated herein any further.

It should be noted that the components or modules related to this disclosure are only described above. However, this disclosure is not limited thereto, and the signal transmitting apparatus 800 and the signal transmitting apparatus 900 may further include other components or modules, and reference may be made to related techniques for particulars of these components or modules.

Furthermore, for the sake of simplicity, connection relationships between the components or modules or signal profiles thereof are only illustrated in FIGs. 8 and 9. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the embodiment of this disclosure, by determining the transmit power of the forwarding signal and/or the generated signal by the repeater, the repeater may control power when simultaneous transmitting forwarding signals and/or generated signals is/are needed, which may avoid power limitation, and improve transmission efficiency and throughput of the entire network.

### Embodiment of a third aspect

The embodiment of this disclosure provides a repeater/third device. The repeater may be, for example, a network device or a terminal equipment, or may also be one or some components or assemblies configured in the network device or terminal equipment. The repeater may include, for example, the signal transmitting apparatus as described in the embodiment of the second aspect, and the third device may include, for example, the information transmitting apparatus as described in the embodiment of the second aspect.

FIG. 10 is a schematic diagram of the repeater/third device of the embodiment of this disclosure. As shown in FIG. 10, the repeater/third device 1000 may include a processor 1010 and a memory 1020, the memory 1020 being coupled to the processor 1010. The memory 1020 may store data, and it may store a program 1030 for information processing, and execute the program 1030 under control of the processor 1010. It should be noted that this figure is illustrative only, and other types of structures may also be used, so as to supplement or replace this structure and achieve a telecommunications function or other functions.

In one implementation, a part or all of the functions of a signal transmitting apparatus /the information transmitting apparatus may be integrated into the processor 1010. For example, the processor 1010 may be configured to: determine transmit power of a first signal and/or transmit power of a second signal, and transmit or not transmit the first signal and/or the second signal; and/or, determine transmit power of a forwarding signal and/or a generated signal, transmit or not to transmit the forwarding signal, and transmit or not to transmit the generated signal.

Or, the processor 1010 may be configured to: transmit first indication information and/or second indication information, the first indication information being used to indicate parameters related to the transmit power of the first signal, and the second indication information being used to indicate parameters related to the transmit power of the second signal.

In another implementation, a signal transmitting apparatus/an information transmitting apparatus and the processor 1010 may be configured separately; for example, the signal transmitting apparatus/the information transmitting apparatus may be configured as a chip connected to the processor 1010, and the functions of the signal transmitting apparatus/the information transmitting apparatus are executed under control of the processor 1010.

As shown in FIG. 10, the processor 1010 is sometimes referred to as a controller or an operational control, which may include a microprocessor or other processor devices and/or logic devices. The processor 1010 receives input and controls operations of components of the repeater 1000.

The memory 1020 may be, for example, one or more of a buffer memory, a flash memory, a hard drive, a mobile medium, a volatile memory, a nonvolatile memory, or other suitable devices, which may store various data, etc., and furthermore, store programs executing related information. And the processor 1010 may execute programs stored in the memory 1020, so as to realize information storage or processing, etc. Functions of other parts are similar to those of the related art, which shall not be described herein any further. The parts of the repeater or third device 1000 may be realized by specific hardware, firmware, software, or any combination thereof, without departing from the scope of this disclosure.

Furthermore, as shown in FIG. 10, the repeater or third device 1000 may further include a transceiver 1040 and an antenna 1050, etc. Functions of the above components are similar to those in the related art, and shall not be described herein any further. It should be noted that the repeater 1000 does not necessarily include all the parts shown in FIG. 10. Furthermore, the repeater or third device 1000 may include parts not shown in FIG. 10, and the related art may be referred to.

According to the embodiment of this disclosure, by determining the transmit power of the forwarding signal and/or the generated signal by the repeater, the repeater may control power when simultaneous transmitting forwarding signals and/or generated signals is/are needed, which may avoid power limitation, and improve transmission efficiency and throughput of the entire network.

### Embodiment of a fourth aspect

The embodiment of this disclosure provides a communication system, including the repeater as described in the embodiment of the fourth aspect.

For example, reference may be made to FIG. 1 for a structure of the communication system. As shown in FIG. 1, the communication system 100 includes a first device 101, a repeater 102 and a second device 103. For the sake of simplicity, description is given in FIG. 1 by taking one first device, one repeater and one second device only as an example; however, the embodiment of this disclosure is not limited thereto.

In the embodiment of this disclosure, the repeater 102 is configured to execute a signal transmitting method as described in the embodiment of the first aspect, and contents thereof are incorporated herein, which shall not be repeated herein any further.

In the embodiment of this disclosure, the communication system may further include a third device configured to execute the information transmitting method as described in the embodiment of the first aspect, and contents thereof are incorporated herein, which shall not be repeated herein any further.

In the embodiment of this disclosure, the third device is the first device.

According to the embodiment of this disclosure, by determining the transmit power of the forwarding signal and/or the generated signal by the repeater, the repeater may control power when simultaneous transmitting forwarding signals and/or generated signals is/are needed, which may avoid power limitation, and improve transmission efficiency and throughput of the entire network.

An embodiment of this disclosure provides a computer readable program code, which, when executed in a repeater, will cause a computer to carry out the method for transmitting a signal as described in the embodiment of the first aspect in the repeater.

An embodiment of this disclosure provides a computer readable medium, including a computer readable program code, which will cause a computer to carry out the method for transmitting a signal as described in the embodiment of the first aspect in a repeater.

An embodiment of this disclosure provides a computer readable program code, which, when executed in a third device, will cause a computer to carry out the method for transmitting information as described in the embodiment of the first aspect in the third device.

An embodiment of this disclosure provides a computer readable medium, including a computer readable program code, which will cause a computer to carry out the method for transmitting information as described in the embodiment of the first aspect in a third device.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs a MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, a plurality of processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

As to implementations containing the above embodiments, following supplements are further disclosed.
1. A signal transmitting method, including:
   determining transmit power of a first signal and/or transmit power of a second signal by a repeater; and
   transmitting or not transmitting the first signal and/or the second signal by the repeater.
2. The method according to supplement 1, wherein the first signal overlaps with the second signal in a time domain, or an interval between the first signal and the second signal in a time domain is less than or not greater than a first predetermined value.
3. The method according to supplement 1, wherein the first signal belongs to a forwarding signal or a generated signal of the repeater, and the second signal belongs to a forwarding signal or a generated signal of the repeater;
   wherein the forwarding signal includes a first transmission signal (a first forwarding signal) forwarded to a first device, and/or a second transmission signal (a second forwarding signal) forwarded to a second device;
   and the generated signal includes a third transmission signal (a first generated signal) generated by the repeater and transmitted to the first device, and/or, a fourth transmission signal (a second generated signal) generated by the repeater and transmitted to the second device.
4. The method according to any one of supplements 1-3, wherein the repeater allocates the transmit power of the first signal and/or the transmit power of the second signal according to a priority, and/or determines whether to transmit the first signal and/or the second signal.
5. The method according to any one of supplements 1-4, wherein the priority includes that a priority of a generated signal of the repeater is higher or lower than a priority of a forwarding signal of the repeater, and/or, a priority of a transmission signal of a first device side of the repeater is higher or lower than a priority of a transmission signal of a second device side of the repeater.
6. The method according to supplement 5, wherein in a case where the generated signal of the repeater includes a first generated signal and a second generated signal, a priority of the first generated signal is identical to or different from a priority of the second generated signal.
7. The method according to supplement 5 or 6, wherein in a case where the forwarding signal of the repeater includes a first forwarding signal and a second forwarding signal, priorities of the first forwarding signal and/or the second forwarding signal are identical or different.
8. The method according to supplement 5, wherein the transmission signal of the first device side includes a first forwarding signal and/or a first generated signal, and the transmission signal of the second device side includes a second forwarding signal and/or a second generated signal.
9. The method according to supplement 8, wherein in a case where the transmission signal of the first device side includes the first forwarding signal and the first generated signal, priorities of the first forwarding signal and the first generated signal are identical or different.
10. The method according to supplement 8 or 9, wherein in a case where the transmission signal of the second device side includes the second forwarding signal and the second generated signal, priorities of the second forwarding signal and the second generated signal are identical or different.
11. The method according to supplement 4, wherein the priority exists between intra-frequency signals and/or between inter-frequency signals and/or between signals at the same side and/or between signals at different sides and/or between forwarding signals and/or between generated signals and/or between cells and/or between cell groups.
12. The method according to any one of supplements 5-11, wherein the priority is related to a signal type.
13. The method according to supplement 3, wherein the first device is a first terminal equipment, the second device is a second terminal equipment, or the first device is a network device, and the second device is a terminal equipment, or the first device is a terminal equipment, and the second device is a network device, or the first device is a first network device, and the second device is a second network device.
14. The method according to supplement 3, wherein the first generated signal includes a PRACH, a PUCCH, a PUSCH, and an SRS, and the second generated signal includes an SSB, a CSI-RS, and an SRS.
15. The method according to supplement 4, wherein in a case where a priority of the first signal is higher than that of the second signal, the repeater preferentially allocates the transmit power of the first signal, and/or, the repeater does not transmit the second signal; and/or,
   in a case where the priority of the second signal is higher than that of the first signal, the repeater preferentially allocates the transmit power of the second signal, and/or the repeater does not transmit the first signal.
16. The method according to any one of supplements 4-16, wherein the priority is predefined or is configured via signaling.
17. The method according to any one of supplements 1-16, wherein the first signal and the second signal are at identical carriers or different carriers.
18. The method according to any one of supplements 1-17, wherein the repeater determines the transmit power of the first signal and the second signal respectively, and in a case where a sum of the transmit power of the first signal and the second signal exceeds first maximum transmit power, the repeater adjusts the transmit power of the first signal and/or the second signal, and/or the repeater allocates the transmit power of the first signal and/or the second signal according to the priorities, and/or the repeater does not transmit the first signal or the second signal.
19. The method according to supplement 18, wherein the first signal and the second signal are in the same cell group, the cell group corresponding to the first maximum transmit power.
20. The method according to any one of supplements 1-17, wherein the repeater determines the transmit power of the first signal and the second signal separately, and when the sum of the transmit power of the first signal and the second signal exceeds second maximum transmit power, the repeater adjusts the transmit power of the first signal and/or the second signal, and/or the repeater allocates the transmit power of the first signal and/or the second signal according to priorities, and/or the repeater does not transmit the first signal or the second signal.
21. The method according to supplement 20, wherein the first signal and the second signal are in different cell groups, the different cell groups corresponding to the second maximum transmit power.
22. The method according to any one of supplements 1-21, wherein the repeater may receive first indication information and/or second indication information, the first indication information being used to indicate parameters related to the first signal transmit power, and the second indication information being used to indicate parameters related to the second signal transmit power.
23. A repeater, including a memory and a processor, the memory storing a computer program, and the processor being configured to execute the computer program to carry out the method as described in any one of supplements 1-22.
24. A signal transmitting apparatus, provided in a repeater, the apparatus including:
   a determining module configured to determine transmit power of a first signal and/or transmit power of a second signal; and
   a transmitting module configured to transmit or not transmit the first signal and/or the second signal.
25. The apparatus according to supplement 24, wherein the first signal overlaps with the second signal in a time domain, or an interval between the first signal and the second signal in a time domain is less than or not greater than a first predetermined value.
26. The apparatus according to supplement 24, wherein the first signal belongs to a forwarding signal or a generated signal of the repeater, and the second signal belongs to a forwarding signal or a generated signal of the repeater;
   wherein the forwarding signal includes a first transmission signal (a first forwarding signal) forwarded to a first device, and/or a second transmission signal (a second forwarding signal) forwarded to a second device;
   and the generated signal includes a third transmission signal (a first generated signal) generated by the repeater and transmitted to the first device, and/or, a fourth transmission signal (a second generated signal) generated by the repeater and transmitted to the second device.
27. The apparatus according to any one of supplements 24-26, wherein the determining module allocates the transmit power of the first signal and/or the transmit power of the second signal according to a priority, and/or determines whether to transmit the first signal and/or the second signal.
28. The apparatus according to any one of supplements 24-27, wherein the priority includes that a priority of a generated signal of the repeater is higher or lower than a priority of a forwarding signal of the repeater, and/or, a priority of a transmission signal of a first device side of the repeater is higher or lower than a priority of a transmission signal of a second device side of the repeater.
29. The apparatus according to supplement 28, wherein in a case where the generated signal of the repeater includes a first generated signal and a second generated signal, a priority of the first generated signal is identical to or different from a priority of the second generated signal.
30. The apparatus according to supplement 28 or 29, wherein in a case where the forwarding signal of the repeater includes a first forwarding signal and a second forwarding signal, priorities of the first forwarding signal and/or the second forwarding signal are identical or different.
31. The apparatus according to supplement 28, wherein the transmission signal of the first device side includes a first forwarding signal and/or a first generated signal, and the transmission signal of the second device side includes a second forwarding signal and/or a second generated signal.
32. The apparatus according to supplement 31, wherein in a case where the transmission signal of the first device side includes the first forwarding signal and the first generated signal, priorities of the first forwarding signal and the first generated signal are identical or different.
33. The apparatus according to supplement 31 or 32, wherein in a case where the transmission signal of the second device side includes the second forwarding signal and the second generated signal, priorities of the second forwarding signal and the second generated signal are identical or different.
34. The apparatus according to supplement 26, wherein the priority exists between intra-frequency signals and/or between inter-frequency signals and/or between signals at the same side and/or between signals at different sides and/or between forwarding signals and/or between generated signals and/or between cells and/or between cell groups.
35. The apparatus according to any one of supplements 28-34, wherein the priority is related to a signal type.
36. The apparatus according to supplement 26, wherein the first device is a first terminal equipment, the second device is a second terminal equipment, or the first device is a network device, and the second device is a terminal equipment, or the first device is a terminal equipment, and the second device is a network device, or the first device is a first network device, and the second device is a second network device.
37. The apparatus according to supplement 26, wherein the first generated signal includes a PRACH, a PUCCH, a PUSCH, and an SRS, and the second generated signal includes an SSB, a CSI-RS, and an SRS.
38. The apparatus according to supplement 27, wherein in a case where a priority of the first signal is higher than that of the second signal, the determining module preferentially allocates the transmit power of the first signal, and/or, the repeater does not transmit the second signal; and/or,
   in a case where the priority of the second signal is higher than that of the first signal, the repeater preferentially allocates the transmit power of the second signal, and/or the repeater does not transmit the first signal.
39. The apparatus according to any one of supplements 27-38, wherein the priority is predefined or is configured via signaling.
40. The apparatus according to any one of supplements 24-38, wherein the first signal and the second signal are at identical carriers or different carriers.
41. The apparatus according to any one of supplements 24-40, wherein the determining module determines the transmit power of the first signal and the second signal respectively, and in a case where a sum of the transmit power of the first signal and the second signal exceeds first maximum transmit power, the determining module adjusts the transmit power of the first signal and/or the second signal, and/or the determining module allocates the transmit power of the first signal and/or the second signal according to the priorities, and/or the determining module determines not to transmit the first signal or the second signal.
42. The apparatus according to supplement 41, wherein the first signal and the second signal are in the same cell group, the cell group corresponding to the first maximum transmit power.
43. The apparatus according to any one of supplements 24-40, wherein the determining module determines the transmit power of the first signal and the second signal separately, and when the sum of the transmit power of the first signal and the second signal exceeds second maximum transmit power, the determining module adjusts the transmit power of the first signal and/or the second signal, and/or the determining module allocates the transmit power of the first signal and/or the second signal according to priorities, and/or the determining module determines not to transmit the first signal or the second signal.
44. The apparatus according to supplement 43, wherein the first signal and the second signal are in different cell groups, the different cell groups corresponding to the second maximum transmit power.
45. The apparatus according to any one of supplements 24-44, wherein the repeater further includes:
   a receiving module configured to receive first indication information and/or second indication information, the first indication information being used to indicate parameters related to the first signal transmit power, and the second indication information being used to indicate parameters related to the second signal transmit power.
46. A signal transmitting apparatus, provided in a repeater, the apparatus including:
   a processing module configured to determine transmit power of a forwarding signal and/or a generated signal;
   a forwarding module configured to transmit or not to transmit the forwarding signal; and
   a communicating module configured to transmit or not to transmit the generated signal.
47. A repeater, including a signal transmitting apparatus as described in any one of supplements 24-46.
48. A communication system, including a communication system as described in supplement 47.

## Claims

1. A signal transmitting apparatus, configured in a repeater, the apparatus comprising:
a determining module configured to determine transmit power of a first signal and/or transmit power of a second signal; and
a transmitting module configured to transmit or not transmit the first signal and/or the second signal.

2. The apparatus according to claim 1, wherein the first signal overlaps with the second signal in a time domain, or an interval between the first signal and the second signal in a time domain is less than or not greater than a first predetermined value.

3. The apparatus according to claim 1, wherein the first signal belongs to a forwarding signal or a generated signal of the repeater, and the second signal belongs to a forwarding signal or a generated signal of the repeater.

4. The apparatus according to claim 3, wherein the forwarding signal includes a first transmission signal (a first forwarding signal) forwarded to a first device, and/or a second transmission signal (a second forwarding signal) forwarded to a second device.

5. The apparatus according to claim 3, wherein the generated signal includes a third transmission signal (a first generated signal) generated by the repeater and transmitted to the first device, and/or, a fourth transmission signal (a second generated signal) generated by the repeater and transmitted to the second device.

6. The apparatus according to claim 1, wherein the determining module allocates the transmit power of the first signal and/or the transmit power of the second signal according to a priority, and/or determines whether to transmit the first signal and/or the second signal.

7. The apparatus according to claim 6, wherein the priority comprises that a priority of a generated signal of the repeater is higher or lower than a priority of a forwarding signal of the repeater, and/or, a priority of a transmission signal of a first device side of the repeater is higher or lower than a priority of a transmission signal of a second device side of the repeater.

8. The apparatus according to claim 7, wherein in a case where the generated signal of the repeater includes a first generated signal and a second generated signal, a priority of the first generated signal is identical to or different from a priority of the second generated signal.

9. The apparatus according to claim 7, wherein in a case where the forwarding signal of the repeater includes a first forwarding signal and a second forwarding signal, priorities of the first forwarding signal and/or the second forwarding signal are identical or different.

10. The apparatus according to claim 7, wherein the transmission signal of the first device side includes a first forwarding signal and/or a first generated signal, and the transmission signal of the second device side includes a second forwarding signal and/or a second generated signal.

11. The apparatus according to claim 10, wherein in a case where the transmission signal of the first device side includes the first forwarding signal and the first generated signal, priorities of the first forwarding signal and the first generated signal are identical or different.

12. The apparatus according to claim 10, wherein in a case where the transmission signal of the second device side includes the second forwarding signal and the second generated signal, priorities of the second forwarding signal and the second generated signal are identical or different.

13. The apparatus according to claim 6, wherein the priority exists between intra-frequency signals and/or between inter-frequency signals and/or between signals at the same side and/or between signals at different sides and/or between forwarding signals and/or between generated signals and/or between cells and/or between cell groups.

14. The apparatus according to claim 6, wherein the priority is related to a signal type.

15. The apparatus according to claim 4, wherein the first device is a first terminal equipment, the second device is a second terminal equipment, or the first device is a network device, and the second device is a terminal equipment, or the first device is a terminal equipment, and the second device is a network device, or the first device is a first network device, and the second device is a second network device.

16. The apparatus according to claim 4, wherein the first generated signal includes a PRACH, a PUCCH, a PUSCH, and an SRS, and the second generated signal includes an SSB, a CSI-RS, and an SRS.

17. The apparatus according to claim 5, wherein in a case where a priority of the first signal is higher than that of the second signal, the determining module preferentially allocates the transmit power of the first signal, and/or, the determining module determines not to transmit the second signal; and/or,
in a case where the priority of the second signal is higher than that of the first signal, the determining module preferentially allocates the transmit power of the second signal, and/or the determining module determines not to transmit the first signal.

18. The apparatus according to claim 5, wherein the priority is predefined or is configured via signaling.

19. The apparatus according to claim 1, wherein the apparatus further comprises:
a receiving module configured to receive first indication information and/or second indication information, the first indication information being used to indicate parameters related to the transmit power of the first signal, and the second indication information being used to indicate parameters related to the transmit power of the second signal.

20. An information transmitting apparatus, applicable to a third device, the apparatus comprising:
a transmitting unit configured to transmit first indication information and/or second indication information, the first indication information being used to indicate parameters related to transmit power of a first signal, and the second indication information being used to indicate parameters related to transmit power of a second signal.
